Europäisches Patentamt

European Patent Office

Office européen des brevets

(19)

(11) Veröffentlichungsnummer: **0 190 986**

**A1**

# EUROPÄISCHE PATENTANMELDUNG

(12)

(21) Anmeldenummer: 86730006.3

(22) Anmeldetag: 16.01.86

(51) Int. Cl.⁴: **G01L 9/06**

(30) Priorität: 30.01.85 DE 3503489

(43) Veröffentlichungstag der Anmeldung:
13.08.86 Patentblatt 86/33

(84) Benannte Vertragsstaaten:
AT BE CH DE FR GB IT LI NL

(71) Anmelder: **Siemens Aktiengesellschaft Berlin und München**
**Wittelsbacherplatz 2**
**D-8000 München 2(DE)**

(72) Erfinder: **Schulz, Winfried, Dr. Ing.**
**Kurfürstenstrasse 29**
**D-1000 Berlin 42(DE)**

(54) Schaltungsanordnung zur Kompensation der Temperaturabhängigkeit von Empfindlichkeit und Nullpunkt eines piezoresistiven Drucksensors.

(57) Die Erfindung bezieht sich auf eine Schaltungsanordnung zur Kompensation der Temperaturabhängigkeit von Empfindlichkeit und Nullpunkt eines piezoresistiven Drucksensors, mit dem in thermischer Kopplung ein Temperaturfühler angeordnet ist. Dem Temperaturfühler ist ein Hilfsverstärker nachgeordnet, in dessen Ausgangskreis die Speisediagonale des Drucksensors liegt. An die Ausgangsdiagonale des Drucksensors ist ein Ausgangsverstärker angeschlossen, an den eingangsseitig über eine Widerstandsanordnung eine temperaturabhängige Korrekturspannung anlegbar ist.

Um bei einer solchen Schaltungsanordnung die Kompensation der Temperaturabhängigkeit der Empfindlichkeit unabhängig von der der Temperaturabhängigkeit des Nullpunkts vernehmen zu können, ist die Widerstandsanordnung (17) unmittelbar mit dem Ausgang (16) des Temperaturfühlers - (11) verbunden.

Schaltungsanordnung zur Kompensation der Temperaturabhängigkeit von Empfindlichkeit und Nullpunkt eines piezoresistiven Drucksensors

Die Erfindung bezieht sich auf eine Schaltungsanordnung zur Kompensation der Temperaturabhängigkeit von Empfindlichkeit und Nullpunkt eines piezoresistiven Drucksensors in Brückenschaltung mit einem in thermischer Kopplung mit dem Drucksensor angeordneten Temperaturfühler und einem diesem nachgeordneten Hilfsverstärker, in dessen Ausgangskreis der Drucksensor mit seiner Speisediagonale liegt, sowie mit einem an die Ausgangsdiagonale des Drucksensors angeschlossenen Ausgangsverstärker, an dessen Eingang über eine Widerstandsanordnung eine temperaturabhängige Korrekturspannung anlegbar ist.

Bei einer bekannten Schaltungsanordnung dieser Art - ("Elektronik" 13/29.06.1984, Seiten 95 bis 98) bildet ein in Reihe mit einem Transistor liegender Temperatursensor einen Temperaturfühler, an dessen Ausgang mit seinem Eingang ein Operationsverstärker angeschlossen ist. Der Operationsverstärker wirkt ausgangsseitig auf einen als Stellglied dienenden Transistor, in dessen Emitter-Kollektor-Kreis die Speisediagonale des Drucksensors in Brückenschaltung liegt; auf diese Weise ist eine temperaturgesteuerte Spannungsversorgung für den Drucksensor bereitgestellt, mit der die Temperaturabhängigkeit der Empfindlichkeit des Drucksensors kompensiert ist. Zur Kompensation der Temperaturabhängigkeit des Nullpunktes des Drucksensors dient bei der bekannten Schaltungsanordnung eine Widerstandsanordnung, die einerseits über jeweils einen Widerstand mit jeweils einem Eingang eines an die Ausgangsdiagonale des Drucksensors angeschlossenen Ausgangsverstärkers und andererseits an eine feste Bezugsspannung angeschlossen ist; das Bezugspotential des Ausgangsverstärkers wird mittels eines weiteren Operationsverstärkers bereitgestellt, der eingangsseitig parallel zur Speisediagonale des Drucksensors liegt, so daß die Kompensation des Temperaturverhaltens des Nullpunkts des Drucksensors bei der bekannten Schaltungsanordnung von der Höhe der Spannung an der Speisediagonale des Drucksensors abhängig ist.

Der Erfindung liegt die Aufgabe zugrunde, eine Schaltungsanordnung zur Kompensation der Temperaturabhängig von Empfindlichkeit und Nullpunkt eines piezoresistiven Drucksensors in Brückenschaltung vorzuschlagen, bei der die Kompensation der Temperaturabhängigkeit der Empfindlichkeit unabhängig von der Kompensation der Temperaturabhängigkeit des Nullpunktes vorgenommen werden kann, indem die dafür benötigten Schaltungsteile rückwirkungsfrei voneinander entkoppelt sind.

Zur Lösung dieser Aufgabe ist bei einer Schaltungsanordnung der eingangs angegebenen Art erfindungsgemäß die Widerstandsanordnung unmittelbar mit dem Ausgang des Temperaturfühlers verbunden.

Ein wesentlicher Vorteil der erfindungsgemäßen Schaltungsanordnung besteht darin, daß bei ihr durch die unmittelbar mit dem Ausgang des Temperaturfühlers verbundene Widerstandsanordnung die Kompensation der Temperaturabhängigkeit der Empfindlichkeit des piezoresistiven Drucksensors unabhängig von der Kompensation der Temperaturabhängigkeit des Nullpunktes des Drucksensors vorgenommen werden kann, weil beide Kompensationen infolge rückwirkungsfreier Entkopplung ohne gegenseitige Beeinflussung erfolgen. Dadurch läßt sich der Zeitaufwand für das Justieren der Schaltungsanordnung im Hinblick auf die angestrebte gesamte Kompensation klein halten, wodurch die zum Kompensieren benötigten Wärmeöfen in ihrer Anzahl ebenfalls klein gehalten werden können, was wiederum die Serienfertigung von Druckmeßumformern erheblich erleichtert.

Bei der erfindungsgemäßen Schaltungsanordnung hat es sich als vorteilhaft erwiesen, wenn die Widerstandsanordnung zwei Spannungsteiler enthält, von denen der eine Spannungsteiler mit seinem einen Anschlußende an einem Eingang des Ausgangsverstärkers und der andere Spannungsteiler mit seinem einen Anschlußende an dem anderen Eingang des Ausgangsverstärkers angeschlossen ist, und wenn in Abhängigkeit von dem Temperaturverhalten des Nullpunktes des Drucksensors über Kontakte entweder der eine oder der andere Spannungsteiler mit seinem anderen Anschlußende direkt und der andere oder der eine Spannungsteiler mit seinem anderen Anschlußende über einen Abgleichwiderstand mit dem Ausgang des Temperaturfühlers verbunden ist. Durch die Kontakte ist nämlich die Möglichkeit gegeben, daß in der Tendenz bekannte temperaturabhängige Verhalten des Nullpunktes des jeweiligen Drucksensors von vornherein zu berücksichtigen, so daß sich durch Verändern des Abgleichwiderstandes eine Kompensation der Temperaturabhängigkeit des Nullpunktes in einem vorgegebenen Ausgangstemperaturbereich von z. B. 25°C bis 45°C in einfacher Weise vornehmen läßt.

Piezoresistive Drucksensoren weisen meistens eine stark gekrümmte Temperaturabhängigkeit sowohl der Empfindlichkeit als auch des Nullpunktes über den in Frage kommenden Temperaturbereich auf. Deshalb ist es zur Kompensation in der Regel erforderlich, den gesamten Temperaturbereich in mehrere Abschnitte zu unterteilen. Ein unterer Abschnitt des gesamten Temperaturbereichs läßt sich hinsichtlich der Temperaturabhängigkeit des Nullpunktes bei der erfindungsgemäßen Schaltungsanordnung in vorteilhafter Weise dadurch kompensieren, daß über weitere Kontakte an den Abgriffen der Spannungsteiler ein weiterer Abgleichwiderstand anschließbar ist, der im Kollektor--Emitter-Kreis eines Transistors mit dem Bezugspotential des Ausgangsverstärkers verbunden angeordnet ist, und daß der Transistor von einem mit dem Ausgang des Temperaturfühlers verbundenen Steuertransistor schaltbar ist. Der Steuertransistor ist dabei so geschaltet, daß er bei Erreichen einer vorgegebenen Temperatur von z. B. +10°C den nachgeordneten Transistor schaltet, wodurch dann der weitere Abgleichwiderstand wirksam wird und nach Justieren die an den Eingängen des Ausgangsverstärkers liegende Korrekturspannung in der erforderlichen Weise verringert.

Um in einem Bereich relativ hoher Temperatur den Drucksensor hinsichtlich der Temperaturabhängigkeit seines Nullpunktes zu kompensieren, ist es bei der erfindungsgemäßen Schaltungsanordnung vorteilhaft, daß über zusätzliche Kontakte an den Abgriffen der Spannungsteiler ein zusätzlicher Abgleichwiderstand anschließbar ist, der über eine mit dem Ausgang des Temperaturfühlers verbundene Schwellwertschaltung aktivierbar ist. Erreicht nämlich die Temperatur, der der Drucksensor ausgesetzt ist, relativ hohe Werte von z. B. 45°C, dann spricht aufgrund der relativ hohen Ausgangsspannung des Temperaturfühlers die Schwellwertschaltung an, wodurch nach Einstellung des zusätzlichen Abgleichwiderstandes über diesen Widerstand die temperaturabhängige Korrekturspannung an den Eingängen des Ausgangsverstärkers in dem erforderlichen Umfange verändert wird.

Infolge entsprechenden Abgleichs aller Abgleichwiderstände in den angegebenen Temperaturbereichen läßt sich somit mittels der angegebenen Widerstandsanordnung das Temperaturverhalten des Nullpunktes des Drucksensors über einen relativ großen Temperaturbereich abschnittsweise kompensieren.

Bei der erfindungsgemäßen Schaltungsanordnung wird in bekannter Weise das Temperaturverhalten der Empfindlichkeit des Drucksensors zunächst in einem vorgegebenen Ausgangstemperaturbereich von beispielsweise 25°C bis 45°C dadurch kompensiert, daß über einen abgleichbaren Widerstand zwischen dem Ausgang des Temperaturfühlers und dem Eingang des Hilfsverstärkers mittels entsprechender Steuerung dieses Verstärkers eine derartige Spannung an der Eingangsdiagonale des Drucksensors auftritt, wie es zur Kompensation der Empfindlichkeit erforderlich ist. Diese Einstellung erfolgt gemeinsam mit der Kompensation der Nullpunktsdrift des Drucksensors in diesem Temperaturbereich.

Um die Empfindlichkeit auch in dem Bereich verhältnismäßig niedriger Temperaturen zu kompensieren, ist gemäß der Erfindung an dem Eingang des Hilfsverstärkers ein Korrekturwiderstand anschließbar, der im Kollektor-Emitter-Kreis eines weiteren Transistors mit dem Bezugspotential des Ausgangsverstärkers verbunden angeordnet ist, und der weitere Transistor ist von dem Steuertransistor schaltbar. Auf diese Weise ist in schaltungstechnisch wenig aufwendiger Art rückwirkungsfrei und von der Kompensation des Temperaturverhaltens des Nullpunkts entkoppelt dafür gesorgt, daß die Empfindlichkeit des Drucksensors im unteren Temperaturbereich kompensierbar ist, wobei diese Kompensation sinnvollerweise gemeinsam mit der Kompensation der Nullpunktsdrift in diesem Temperaturbereich erfolgt.

Zur Kompensation des Temperaturverhaltens der Empfindlichkeit in einem oberen Temperaturbereich ist bei der erfindungsgemäßen Schaltungsanordnung vorteilhafterweise an dem Eingang des Hilfsverstärkers über die Schwellwertschaltung ein weiterer Korrekturwiderstand anschließbar, der mit dem Ausgang des Temperaturfühlers in Verbindung steht. Dieser Korrekturwiderstand wird also in Abhängigkeit von der Höhe der Ausgangsspannung des Temperaturfühlers bei einer relativ hohen Temperatur aktiviert und sorgt nach entsprechender Einstellung für eine Veränderung der Ausgangsspannung des Hilfsverstärkers bzw. der Spannung an der Eingangsdiagonale des Drucksensors in der Weise, daß eine Kompensation des Temperaturverhaltens auch in dem oberen Temperaturbereich erfolgt.

Die Schwellwertschaltung der erfindungsgemäßen Schaltungsanordnung enthält vorteilhafterweise zwei gegeneinander geschaltete Dioden, deren gemeinsamer Schaltungspunkt auf einem vorgegebenen Potential gehalten ist; an der einen Diode ist der zusätzliche Abgleichwiderstand und an der anderen Diode der weitere Korrekturwiderstand angeschlossen.

Der Temperaturfühler der erfindungsgemäßen Schaltungsanordnung enthält vorteilhafterweise mindestens einen Transistor als Temperatur erfassendes Element, dem ein Impedanzwandler nachgeordnet ist. Ein solcher Aufbau eines Temperaturfühlers zeichnet sich durch eine hohe Linearität und eine sehr geringe Stromaufnahme aus, was insbesondere bei einer Anwendung bei Meßumformern in Zwei--Leiter-Technik vorteilhaft ist.

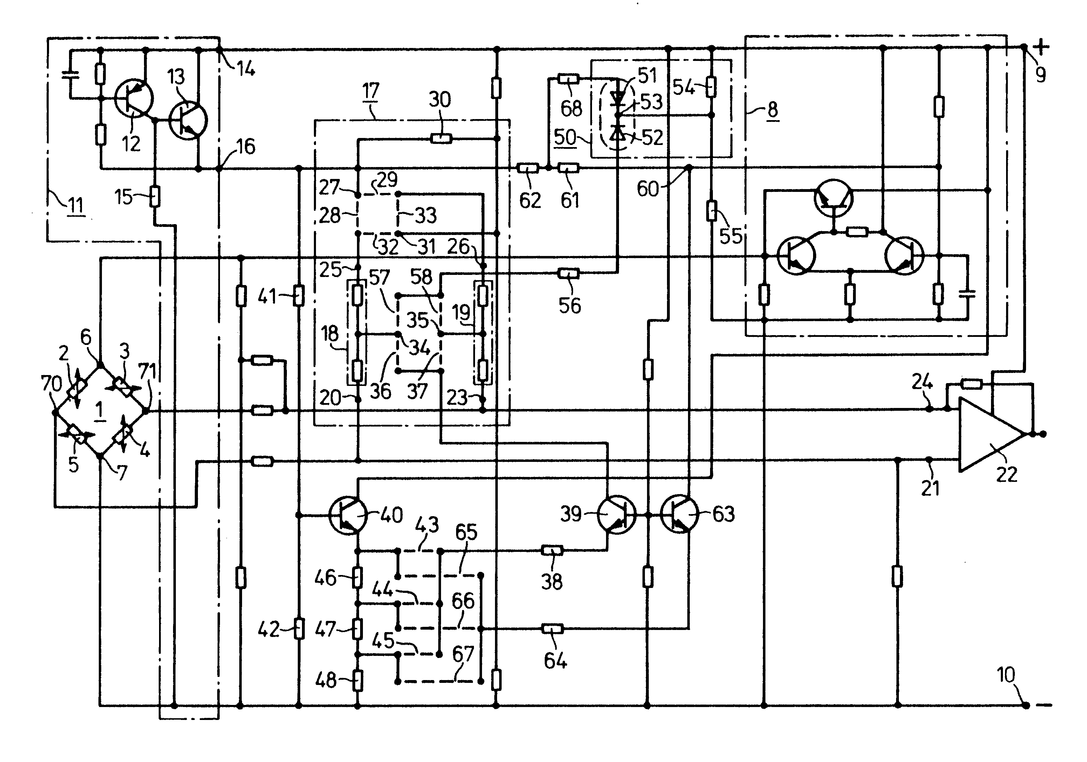

Zur Erläuterung der Erfindung ist in der Figur ein Ausführungsbeispiel der erfindungsgemäßen Schaltungsanordnung mit ihren im Zusammenhang mit der Erfindung wesentlichen Bauelementen dargestellt.

Die gezeigte Schaltungsanordnung dient zur Kompensation der Temperaturabhängigkeit von Empfindlichkeit und Nullpunkt eines piezoresistiven Drucksensors 1, der mehrere pierzoresistive Elemente 2, 3, 4 und 5 in einer Brückenschaltung aufweist. Der Drucksensor 1 liegt mit seiner Eingangsdiagonale 6-7 im Ausgangskreis eines Hilfsverstärkers 8, der einerseits an einem Pluspol 9 und andererseits an einem Minuspol 10 einer nicht dargestellten Betriebsspannungsquelle angeschlossen ist.

Die Schaltungsanordnung enthält neben dem Hilfsverstärker 8 unter anderem einen Temperaturfühler 11, der als die Temperatur fühlende Elemente zwei Transistoren 12 und 13 enthält, die gleichzeitig einen Verstärker bilden. Dadurch ist ein Temperaturfühler gewonnen, der sich durch eine sehr niedrige Stromaufnahme auszeichnet. Der Temperaturfühler 11 ist mit einem Eingang 14 an dem Pluspol 9 und über einen Widerstand 15 an dem Minuspol der Betriebsspannungsquelle angeschlossen. Eine von der Temperatur des Temperaturfühlers 11 abhängige Spannung steht an einem Ausgang 16 des Temperaturfühlers 11 an. Diese Spannung des Temperaturfühlers 11 ist ein Maß für die Temperatur, der der Drucksensor 1 ausgesetzt ist, weil sich der Temperaturfühler 11 in thermischer Kopplung, d. h. in räumlicher Nähe, des Drucksensors 1 befindet.

Einen weiteren wesentlichen Bestandteil der dargestellten Schaltungsanordnung bildet eine Widerstandsanordnung 17, die zwei Spannungsteiler 18 und 19 enthält. Der eine Spannungsteiler 18 ist mit seinem einen Anschlußende 20 mit einem Eingang 21 eines Ausgangsverstärkers 22 verbunden, während der andere Spannungsteiler 19 mit seinem einen Anschlußende 23 mit einem weiteren Eingang 24 des Ausgangsverstärkers 22 in Verbindung steht. Die jeweils anderen Anschlußenden 25 und 26 der beiden Spannungsteiler 18 und 19 sind mit einem Anschlußpunkt 27 über Schaltglieder 28 und 29 in Abhängigkeit von dem in der Tendenz vorbekannten Temperaturverhalten des Nullpunktes des jeweiligen Drucksensors 1 verbunden. Dabei ist der Kontakt 28 bei positivem Verhalten und der Kontakt 30 bei negativem Temperaturverhalten des Nullpunktes wirksam. Der Schaltungspunkt 27 ist fest mit dem Ausgang 16 des Temperaturfühlers 11 verbunden. Die Widerstandsanordnung 17 enthält ferner einen Abgleichwiderstand 30, der mit seinem einen Ende fest mit dem Schaltungspunkt 27 bzw. dem Ausgang 16 des Temperaturfühlers 11 verbunden ist, während er mit seinem anderen Ende an einen Schaltungspunkt 31 geführt ist; über einen Kontakt 32 (bei positivem Temperaturverhalten) oder einen Kontakt 33 (bei negativem Temperaturverhalten ist der Abgleichwiderstand 30 entweder in Reihe zu dem einen Spannungsteiler 18 oder in Reihe zu dem anderen Spannungsteiler 19 schaltbar.

Jeder der beiden Spannungsteiler 18 und 19 ist mit einem Abgriff 34 bzw. 35 versehen. An diesen Abgriffen 34 und 35 kann über weitere Kontakte 36 bzw. 37 ein weiterer Abgleichwiderstand 38 angeschlossen werden. Dies geschieht mittels eines Transistors 39, der von einem vorgeordneten Steuertransistor 40 schaltbar ist. Dieser Steuertransistor 40 ist an einen aus den Widerständen 41 und 42 gebildeten Spannungsteiler angeschlossen, an dem die Spannung am Ausgang 16 des Temperaturfühlers 11 liegt. Der Steuertransistor 40 ist demzufolge mit einer von der Temperatur abhängigen Spannung beaufschlagt und - schaltet den Transistor 39 bei Temperaturen (z. B. 10 °C, 15 °C, 20 °C), die über verschiedenen Temperaturen zugeordnete Brücken 43, 44 und 45 im Zusammenwirken mit Widerständen 46, 47 und 48 wählbar sind. Mit dem weiteren Abgleichwiderstand 38 wird eine Kompensation der Temperaturverhaltens des Nullpunkts des Drucksensors 1 in einem unteren Temperaturbereich bewirkt.

Zur Kompensation des Temperaturverhaltens des Nullpunkts des Drucksensors 1 in einem oberen Temperaturbereich dient eine Schwellwertschaltung 50, die unter anderem zwei Dioden 51 und 52 enthält, die gegeneinander geschaltet sind. Ein gemeinsamer Schaltungspunkt 53 der beiden Dioden 51 und 52 wird über einen Spannungsteiler mit u. a. einem Widerstand 54 auf einem vorgegebenen Potential gehalten. An dem von dem gemeinsamen Schaltungspunkt 53 abgewendeten Ende ist die Diode 52 mit einem zusätzlichen Abgleichwiderstand 56 verbunden, der mit seinem anderen Anschluß über zusätzliche Kontakte 57 und 58 an den Abgriffen 36 und 37 der beiden Spannungsteiler 18 und 19 anschließbar ist. Dieser zusätzliche Abgleichwiderstand 56 ist dann wirksam, wenn die Spannung am Ausgang 16 infolge einer relativ hohen Temperatur ebenfalls relativ hoch ist.

Der oben bereits erwähnte Hilfsverstärker 8 ist mit seinem Eingang 60 über einen abgleichbaren Widerstand 61 und einen Festwiderstand 62 an dem Ausgang 16 des Temperaturfühlers 11 angeschlossen. Außerdem ist mit dem Eingang 60 des Hilfsverstärkers 8 über einen weiteren Transistor 63 ein Korrekturwiderstand 64 anschließbar, der über weitere Brücken 65, 66 und 67 mit den Widerständen 46 bis 48 verbindbar ist. Der weitere Transisotr 63 wird ebenso wie der Transistor 39 von dem Steuertransistor 40 bei einer verhältnismäßig niedrigen Temperatur geschaltet, so daß damit die Spannung am Eingang des Hilfsverstärkers 8 und damit auch die vom Ausgang des Hilfsverstärkers 8 der Speisediagonale 6-7 des Drucksensors 1 zugeführte Spannung korrigiert wird.

Ein weiterer Korrekturwiderstand 68 ist einerseits an dem Anodenanschluß der Diode 51 der Schwellwertschaltung 50 angeschlossen und andererseits über den Festwiderstand 62 mit dem Ausgang 16 des Temperaturfühlers 11 verbunden. Auf diese Weise läßt sich erreichen, daß das Temperaturverhalten der Empfindlichkeit des Drucksensors 1 in einem höheren Temperaturbereich kompensiert wird, weil über diesen weiteren Korrekturwiderstand 68 die Eingangsspannung des Hilfsverstärkers 8 infolge der Verbindung über dem Widerstand 55 verändert wird.

Bei der Einstellung der dargestellten Schaltungsanordnung zur Kompensation der Temperaturabhängigkeit wird beispielsweise zunächst die Schaltungsanordnung so bemessen, daß sie bei einer Temperatur von beispielsweise 25 °C den gestellten Anforderungen gerecht wird. Anschließend wird die Schaltungsanordnung mit dem Drucksensor 1 z. B. einer Temperatur von 45 °C ausgesetzt. Bei dieser Temperatur wird einerseits der Abgleichwiderstand 30 so verändert, daß das Temperaturverhalten des Nullpunkts in dem Temperaturbereich von 25 °C bis 45 °C konstant bleibt und andererseits der abgleichbare Widerstand 61 so eingestellt, daß auch die Empfindlichkeit in diesem Temperaturbereich konstant ist.

Oberhalb einer Temperatur von 45 °C spricht die Schwellwertschaltung 50 an, indem die Dioden 51 und 52 leitend werden. Es wird jetzt der zusätzliche Abgleichwiderstand 56 so abgeglichen, daß der Nullpunkt auch bei dieser Temperatur beispielsweise bis 65 °C konstant bleibt. Ebenfalls wird der weitere Korrekturwiderstand 68 abgeglichen, und zwar derart, daß das Temperaturverhalten der Empfindlichkeit in diesem Temperaturbereich konstant bleibt.

Unterhalb von 25 °C treten die Transistoren 39 und 63 in Funktion, wobei durch die Brücken 43 bis 45 sowie 65 bis 67 der Einsatzpunkt einstellbar ist, beispielsweise auf 10 °C, 15 °C oder 20 °C. Durch Veränderung des weiteren Abgleichwiderstandes 38 läßt sich dann das Temperaturverhalten des Nullpunktes auch in dem Bereich unterhalb von 25 °C konstant halten, während durch Veränderung am Korrekturwiderstand 64 in diesem Temperaturbereich auch die Empfindlichkeit konstant und unabhängig von der Temperatur einstellbar ist.

Die geschilderten Abgleicharbeiten zur Kompensation des Temperaturverhaltens von Empfindlichkeit und Nullpunkt des Drucksensors 1 können dabei jeweils unabhängig voneinander hinsichtlich Empfindlichkeit und Nullpunkt vorgenommen werden, wodurch sich die Abgleicharbeiten relativ einfach und damit mit geringem Zeitaufwand durchführen lassen.

**Ansprüche**

1. Schaltungsanordnung zur Kompensation der Temperaturabhängigkeit von Empfindlichkeit und Nullpunkt eines piezoresistiven Drucksensors in Brückenschaltung mit einem in thermischer Kopplung mit dem Drucksensor angeordneten Temperaturfühler und einem diesem nachgeordneten Hilfsverstärker, in dessen Ausgangskreis der Drucksensor mit seiner Speisediagonale liegt,

sowie mit einem an die Ausgangsdiagonale des Drucksensors angeschlossenen Ausgangsverstärker, an dessen Eingang über eine Widerstandsanordnung eine temperaturabhängige Korrekturspannung anlegbar ,

dadurch gekennzeichnet, daß die Widerstandanordnung - (17) unmittelbar mit dem Ausgang (16) des Temperaturfühlers (11) verbunden ist.

2. Schaltungsanordnung nach Anspruch 1, dadurch gekennzeichnet, daß die Widerstandanordnung (17) zwei Spannungsteiler (18, 19) enthält, von denen der eine Spannungsteiler (18) mit seinem einen Anschlußende (20) an einem Eingang (21) des Ausgangsverstärkers (22) und der andere Spannungsteiler (19) mit seinem einen Anschlußende (23) an dem anderen Eingang (24) des Ausgangsverstärkers (22) angeschlossen ist, und daß in Abhängigkeit von dem Temperaturverhalten des Nullpunktes des Drucksensors (1) über Kontakte (28, 29) entweder der eine oder der andere Spannungsteiler (18, 19) mit seinem anderen Anschlußende (25, 26) direkt und der andere oder der eine Spannungsteiler (19, 18) mit seinem anderen Anschlußende (26, 25) über einen Abgleichwiderstand (30) mit dem Ausgang (16) des Temperaturfühlers - (11) verbunden ist.

3. Schaltungsanordnung nach Anspruch 2, dadurch gekennzeichnet, daß über weitere Kontakte (36, 37) an den Abgriffen (34, 35) der Spannungsteiler (18, 19) ein weiterer Abgleichwiderstand (38) anschließbar ist, der im Kollektor-Emitter-Kreis eines Transistors (39) mit dem Bezugspotential des Ausgangsverstärkers (22) verbunden angeordnet ist, und daß der Transistor (39) von einem mit dem Ausgang (16) des Temperaturfühlers (11) verbundenen Steuertransistor (40) schaltbar ist.

4. Schaltungsanordnung nach Anspruch 2 oder 3,

dadurch gekennzeichnet, daß über zusätzliche Kontakte (57, 58) an den Abgriffen (34, 35) der Spannungsteiler (18, 19) ein zusätzlicher Abgleichwiderstand (56) anschließbar ist, der über eine mit dem Ausgang (16) des Temperaturfühlers (11) verbundene Schwellwertschaltung (50) aktivierbar ist.

5. Schaltungsanordnung nach Anspruch 3, **dadurch gekennzeichnet**, daß an dem Eingang (60) des Hilfsverstärkers (8) ein Korrekturwiderstand (64) anschließbar ist, der im Kollektor-Emitter-Kreis eines weiteren Transistors (63) mit dem Bezugspotential des Ausgangsverstärkers - (22) verbunden angeordnet ist, und daß der weitere Transistor (63) von dem Steuertransistor (40) schaltbar ist.

6. Schaltungsanordnung nach Anspruch 4, **dadurch gekennzeichnet**, daß an dem Eingang des Hilfsverstärkers (8) über die Schwellwertschaltung (50) ein weiterer Korrekturwiderstand (68) anschließbar ist, der mit dem Ausgang - (16) des Temperaturfühlers (11) in Verbindung steht.

7. Schaltungsanordnung nach Anspruch 4 oder 6,

**dadurch gekennzeichnet**, daß die Schwellwertschaltung - (50) zwei gegeneinander geschaltete Dioden (51, 52) enthält, deren gemeinsamer Schaltungspunkt (53) auf einem vorgegebenen Potential gehalten ist, und daß an der einen Diode (52) der zusätzliche Abgleichwiderstand (56) und an der anderen Diode (51) der weitere Korrekturwiderstand (68) angeschlossen.

8. Schaltungsanordnung nach einem der vorangehenden Ansprüche, **dadurch gekennzeichnet**, daß der Temperaturfühler (11) mindestens einen Transistor (12) als Temperatur erfassendes Element enthält, dem ein Impedanzwandler (13) nachgeordnet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | FR-A-2 414 193 (HITACHI LTD.)<br>* Insgesamt *<br><br>--- | 1 | G 01 L 9/06 |
| A | US-A-4 463 274 (C. SWARTZ)<br>* Insgesamt *<br><br>--- | 1 | |
| A | WO-A-8 103 094 (MOTOROLA INC.)<br>* Insgesamt *<br><br>--- | 1 | |
| A | US-A-4 190 804 (C.R. PINE et al.)<br>* Insgesamt *<br><br>--- | 1 | |
| A | PATENTS ABSTRACTS OF JAPAN, Band 8, Nr. 252 (P-314) [1689], 17. November 1984, Seite 53 P 314; & JP - A - 59 122 923 (TOSHIBA K.K.) 16.07.1984<br><br>----- | 1 | RECHERCHIERTE SACHGEBIETE (Int Cl 4)<br><br>G 01 L 9<br>G 01 L 1<br>G 01 L 19 |

Der vorliegende Recherchenbericht wurde für alle Patentansprüche erstellt.

| Recherchenort | Abschlußdatum der Recherche | Prüfer |
|---|---|---|
| DEN HAAG | 16-04-1986 | VAN ASSCHE P.O. |